(19) Europäisches Patentamt
European Patent Office
Office européen des brevets

(11) EP 3 941 717 B1

(12) **FASCICULE DE BREVET EUROPEEN**

(45) Date de publication et mention de la délivrance du brevet:
**11.12.2024 Bulletin 2024/50**

(21) Numéro de dépôt: **20728106.4**

(22) Date de dépôt: **17.03.2020**

(51) Classification Internationale des Brevets (IPC):
***B29C 64/153*** *(2017.01)* ***B29C 64/314*** *(2017.01)*
***B33Y 70/00*** *(2020.01)* ***C08K 5/5357*** *(2006.01)*
***C08K 5/00*** *(2006.01)*

(52) Classification Coopérative des Brevets (CPC):
(C-Sets disponibles)
**B29C 64/153; B33Y 10/00; B33Y 70/00;**
**C08K 5/0066; C08K 5/5357;** B29K 2077/00 (Cont.)

(86) Numéro de dépôt international:
**PCT/FR2020/050581**

(87) Numéro de publication internationale:
**WO 2020/188220 (24.09.2020 Gazette 2020/39)**

(54) **POLYAMIDES ET COPOLYAMIDES IGNIFUGES POUR IMPRESSION 3D**

FLAMMHEMMENDE POLYAMIDE UND COPOLYAMIDE ZUM 3D-DRUCKEN

FLAME RETARDANT POLYAMIDES AND COPOLYAMIDES FOR 3D PRINTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2019 FR 1902769**

(43) Date de publication de la demande:
**26.01.2022 Bulletin 2022/04**

(73) Titulaire: **ARKEMA FRANCE**
**92700 Colombes (FR)**

(72) Inventeurs:
- **FLAT, Jean-Jacques**
**27470 SERQUIGNY (FR)**
- **BRULE, Benoît**
**27470 SERQUIGNY (FR)**
- **ZOVI, Ornella**
**27470 SERQUIGNY (FR)**
- **DURAND, Jean-Charles**
**27470 SERQUIGNY (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A1- 2005 027 047** **US-A1- 2012 115 996**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
**C08K 5/0066, C08L 77/02;**
**C08K 5/5357, C08L 77/02**

## Description

Objet de l'invention

La présente invention concerne un procédé de préparation de pièces ignifugées par fusion sur lit de poudre, dans lequel la poudre comprend au moins un polyamide et/ou copolyamide et au moins un agent retardateur de flamme, ainsi que la poudre correspondante.

Arrière-plan technique

Les principaux défis industriels pour l'élaboration de poudres de polyamides ou de copolyamides ignifugées et pouvant être mises en oeuvre par toute technologie de fusion sur lit de poudre, notamment couche par couche pour une fabrication additive, peuvent se résumer en quatre points, à savoir :

(i) atteindre le niveau de résistance au feu requis à moindre coût ;
(ii) se placer dans le cadre d'un développement durable, notamment avec des additifs retardateur de flamme respectueux de l'environnement ;
(iii) conserver, au maximum, les propriétés mécaniques du polyamide ; et
(iv) obtenir une bonne mise en oeuvre de ces matériaux dans les machines 3D.

L'ignifugation des polymères est classiquement apportée par la dispersion de charges minérales ou des additifs retardateurs de flamme, notamment à base de composés halogénés.
Toutefois, la plupart de ces composés utilisés, pourtant très efficaces, est soumise à diverses réglementations, limitant voire interdisant à terme leur utilisation du fait d'impacts environnementaux néfastes ou de leur toxicité.
Dans ce contexte, de nouveaux systèmes non-halogénés ont été développés tels les composés à base de phosphore, d'azote ou de composés inorganiques.
Ainsi, la demande de brevet US 2010/0324190 décrit elle une poudre comprenant du polyamide 12 et un additif retardateur de flamme de type polyphosphate d'ammonium ainsi que son utilisation en impression 3D. Toutefois, le polyphosphate d'ammonium est responsable d'une reprise en eau importante des pièces qui le contiennent ce qui nuit à leur stabilité dimensionnelle en cas de variation du taux d'humidité.
US 2005/027047 A1 divulgue des poudres à base de polyamide et d'un agent retardateur de flamme de type ester de phosphonate cyclique pour la préparation de pièces ignifugées par fusion sur lit de poudre.
Afin de satisfaire les besoins en poudres de polyamides ignifugées, il reste donc nécessaire de trouver d'autres alternatives à ces additifs retardateurs de flamme.

Résumé de l'invention

La présente invention découle de la mise en évidence inattendue, par les inventeurs, que l'ajout à une poudre pour impression 3D d'un agent retardateur de flamme de type ester de phosphonate cyclique de formule (III) suivante :

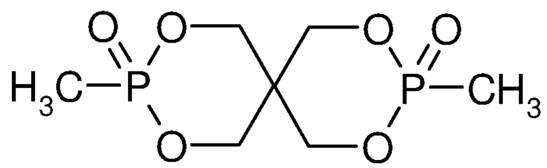

(III)

permettait l'obtention de pièces de bonne qualité en impression 3D tout en leur conférant une ignifugation équivalente ou supérieure à celle obtenue selon l'état de la technique.
Il a été observé que le mélange d'une poudre pour impression 3D et l'agent retardateur de flamme de l'invention permet d'obtenir de pièces ignifugées bien frittées qui ne présentent pas de problème de coalescence, et ainsi garantissant de bonnes propriétés mécaniques.
La présente invention concerne un procédé de préparation de pièces ignifugées par fusion sur lit de poudre, dans lequel la poudre comprend au moins un polyamide et/ou copolyamide et au moins un agent retardateur de flamme de type ester de phosphonate cyclique.
La présente invention concerne également une poudre destinée à la préparation de pièces ignifugées par

fusion sur lit de poudre, comprenant au moins un polyamide et/ou copolyamide et au moins un agent retardateur de flamme de type ester de phosphonate cyclique.

La présente invention concerne également l'utilisation d'une poudre comprenant au moins un polyamide et/ou copolyamide et au moins un agent retardateur de flamme de type ester de phosphonate cyclique dans un procédé de fusion sur lit de poudre, en particulier un procédé d'impression 3D, plus particulièrement par frittage laser ou infra-rouge, pour produire une pièce ignifugée.

La présente invention concerne également un procédé de préparation d'une poudre telle que définie ci-dessus, comprenant le mélange d'au moins un polyamide et/ou copolyamide et d'au moins un agent retardateur de flamme de type ester de phosphonate cyclique.

Description détaillée de l'invention

*Fusion sur lit* de poudre

Comme on l'entend ici un procédé par fusion sur lit de poudre est un procédé de fabrication additive dans lequel un objet ou une pièce est obtenu par la fusion sélective de certaines zones d'un lit de poudre selon l'invention.

De préférence, le procédé selon l'invention est un procédé d'impression 3D et la poudre est une poudre pour impression 3D. Plus préférablement le procédé selon l'invention est un procédé d'impression 3D par frittage laser ou infra-rouge de la poudre.

Par « impression 3D » ou « fabrication additive » au sens de l'invention, on entend tout procédé de fabrication de pièces en volume par ajout ou agglomération de poudre, couche par couche. L'agglomération de poudres par fusion (ci-après « frittage ») est provoquée par un rayonnement, tel que par exemple un faisceau laser (laser *sintering),* un rayonnement infra-rouge, un rayonnement UV, ou toute source de rayonnement électromagnétique permettant de faire fondre la poudre couche par couche pour fabriquer des objets tridimensionnels. La technologie de fabrication d'objets couche par couche est décrite notamment dans la demande de brevet WO2009138692 (pages 1 à 3).

Par « impression 3D » ou « fabrication additive » au sens de l'invention, on entend également les technologies de frittage sélectif utilisant un absorbeur, notamment les technologies connues sous les noms « High *Speed Sintering »* (HSS) et « *Multi-Jet* Fusion » (MJF). Dans ces technologies, la fabrication d'objets en 3D est faite également couche par couche à partir d'un fichier numérique, le procédé utilisant une poudre (par exemple un polymère) qui est fondue de manière maîtrisée pour chaque couche constituant l'objet 3D : un absorbeurest déposé sur la couche (au moyen par exemple d'une encre liquide dans le « procédé à jet d'encre ») avant l'exposition de la couche à un rayonnement électromagnétique (par exemple infra-rouge) qui provoque la fusion des zones contenant ledit absorbeur. Par exemple, les documents de brevet US9643359 et EP1648686 décrivent de tels procédés.

L'impression 3D est généralement utilisée pour produire des prototypes, des modèles de pièces (« rapid prototyping ») ou pour produire des pièces fonctionnelles en petites séries (« rapid manufacturing »), par exemple dans les domaines : automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage, le sport, l'outillage industriel.

Le terme « frittage » dans la présente description inclut tous ces procédés, quel que soit le type de rayonnement. Même si, dans le texte qui suit, on fait référence le plus souvent au procédé laser *sintering,* ce qui est écrit pour le laser *sintering* est bien entendu valable pour les autres procédés de frittage.

Dans les procédés de frittage, il est recommandé d'utiliser un polyamide dont l'écart entre la température de fusion de première chauffe Tf1 et la température de cristallisation Tc est le plus grand possible pour éviter les phénomènes de déformation, et dont l'enthalpie de fusion $\Delta$Hf est la plus élevée possible pour obtenir une bonne définition géométrique des pièces fabriquées. Cela permet d'accroître la fenêtre de travail avec la poudre polyamide et de rendre sa mise en oeuvre dans un procédé de frittage beaucoup plus aisée. Des procédés d'obtention de telles poudres sont notamment décrits dans les documents FR2867190, FR2873380, et FR2930555. De préférence, l'écart Tf1-Tc des poudres PA utilisées en frittage est compris dans la gamme de 30°C à 50°C.

Pour les procédés de frittage, tels que laser *sintering,* on privilégie également l'utilisation de poudre de polyamide avec les propriétés suivantes :

La masse moléculaire de la poudre à l'état solide est de préférence suffisamment faible, c'est-à-dire de viscosité inhérente en solution inférieure à 3, à la fois pour que la fusion des grains ne nécessite pas trop d'énergie et pour que la coalescence inter-grains soit suffisante lors du passage du rayonnement de façon à obtenir un objet le moins poreux possible, avec de bonnes propriétés mécaniques. La viscosité inhérente est mesurée en adaptant la norme ISO 307 :2007 (température de mesure à 20°C au lieu de 25°C) à l'aide d'un tube Ubbelhode ; la mesure est réalisée à 20°C sur un échantillon de 75 mg à la concentration de 0,5 % (m/m) dans du m-crésol. La viscosité inhérente est exprimée en (g/100 g)-1 et est calculée selon la formule suivante :

$$\text{Viscosité inhérente} = \ln(t_s/t_0) \times 1/C, \text{ avec } C = m/p \times 100,$$

dans laquelle $t_s$ est le temps d'écoulement de la solution, $t_0$ est le temps d'écoulement du solvant, m est la masse de l'échantillon dont la viscosité est déterminée et p est la masse du solvant.

Polyamide et copolyamide

On entend par « polyamide » au sens de l'invention les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la décanediamine, la dodécaméthylènediarnine, la métaxylylènediamine, le bis-p aminocyclohexylméthane et la triméthylhexaméthylène diamine avec des diacides tels que les acides isophtalique, téréphtalique, adipique, azélaique, subérique, sébacique et dodécanedicarboxylique. A titre d'exemple de polyamide on peut citer le PA 6, le PA 66, le PA 610, le PA 612, le PA 1010, le PA 1012, le PA 11 et le PA 12.

A titre de copolyamide selon l'invention, on peut citer les copolyamides résultant de la condensation d'au moins deux monomères différents, par exemple d'au moins deux acides alpha oméga aminocarboxyliques différents ou de deux lactames différents ou d'un lactame et d'un acide alpha oméga aminocarboxylique de nombre de carbone différents. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et au moins un autre monomère choisi parmi les diamines aliphatiques différentes de la précédente et les diacides aliphatiques différents du précédent. A titre d'exemples de copolyamides, on peut citer des copolymères de caprolactame et de lauryllactame (PA 6/12), des copolymères de caprolactame, d'acide adipique et d'hexaméthylène diamine (PA 6/66), des copolymères de caprolactame, de lauryl lactame, d'acide adipique et d'hexaméthylène diamine (PA 6/12/66), des copolymères de caprolactame, de lauryllactame, d'acide amino 11 undécanoique, d'acide azelaïque et d'hexaméthylène diamine (PA 6/69/11/12), des copolymères de caprolactame, de lauryllactame, d'acide amino 11 undécanoïque, d'acide adipique et d'hexaméthylène diamine (PA 6/66/11/12), des copolymères de lauryllactame, d'acide azélaïque et d'hexaméthylène diamine (PA 69/12), des copolymères d'acide amino 11 undécanoïque, d'acide téréphtalique et de décaméthylène diamine (PA 11/10T).

La norme NF EN ISO 1874-1 : 2011 définit une nomenclature des polyamides. Le terme « monomère» dans la présente description des poudres à base de polyamides doit être pris au sens d' « unité répétitive ». Le cas où une unité répétitive du polyamide est constituée de l'association d'un diacide avec une diamine est particulier. On considère que c'est l'association d'une diamine et d'un diacide, c'est-à-dire le couple « diaminediacide », dit aussi « XY », en quantité équimolaire qui correspond au monomère. Ceci s'explique par le fait qu'individuellement, le diacide ou la diamine n'est qu'une unité structurale, qui ne suffit pas à elle seule à former un polymère.

A titre d'exemple de diamine X, on peut citer les diamines aliphatiques ayant de 6 à 18 atomes, la diamine X pouvant être aussi arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM), la méthaxylyènediamine, le bis-p aminocyclohexylméthane et la triméthylhexaméthylène diamine.

A titre d'exemple de diacide (ou acide dicarboxylique) Y, on peut citer les acides ayant entre 4 et 36 atomes de carbone. On peut citer par exemple, l'acide adipique, l'acide sébacique, l'acide azélaique, l'acide subérique, l'acide isophtalique, l'acide butanedioïque, l'acide 1,4 cyclohexyldicarboxylique, l'acide téréphtalique, le sel de sodium ou de lithium de l'acide sulfo-isophtalique, les acides gras dimérisés(ces acides gras dimérisés ont une teneur en dimère d'au moins 98% et sont de préférence hydrogénés) et l'acide dodécanédioïque $HOOC-(CH2)_{10}-COOH$.

Les monomères lactames ou aminoacides sont dits de type « Z » :
A titre d'exemple de lactames, on peut citer ceux ayant de 3 à 12 atomes de carbone sur le cycle principal et pouvant être substitués. On peut citer par exemple le β,β-diméthylpropriolactame, le a,a-diméthylpropriolactame, l'amylolactame, le caprolactame, le capryllactame, l'oenantholactame, le 2-pyrrolidone et le lauryllactame.

A titre d'exemple d'aminoacide, on peut citer les alpha-oméga aminoacides, tels que les acides aminocaproïque, amino-7-heptanoïque, amino-11-undécanoïque, n-heptyl-11-aminoundécanôique et amino-12-dodécanoïque.

De préférence, la poudre comprenant un polyamide et/ou copolyamide de l'invention comprend au moins un polyamide et/ou copolyamide choisi parmi les polyamides et copolyamides comprenant au moins un des monomères

XY ou Z suivants : 46, 4T, 56, 59, 510, 512, 513, 514, 516, 518, 536, 6, 69, 610, 612, 613, 614, 616, 618, 636, 6T, 9, 109, 1010, 1012, 1013, 1014, 1016, 1018, 1036, 10T, 11, 12, 129, 1210, 1212, 1213, 1214, 1216, 1218, 1236, 12T, MXD6, MXD10, MXD12, MXD14, et leurs mélanges ; en particulier choisi parmi le PA 11, le PA 12, le PA 1010, le PA 6, le PA 6/10, le PA 6/12, le PA 10/12, le PA 11/1010, et leurs mélanges.

Le polyamide et/ou copolyamide selon l'invention peut être un mélange de polyamides et/ou copolyamides. A titre de mélange on peut citer des mélanges de polyamides/coplyamides aliphatiques et de polyamides/copolyamides semi-aromatiques et des mélanges de polyamides aliphatiques et de polyamides cycloaliphatiques.

Le polyamide et/ou copolyamide selon l'invention peut être un copolymère à blocs polyamide, notamment un copolymère à blocs polyamide et blocs polyéther.

Les copolymères à blocs polyamides et blocs polyéthers résultent de la copolycondensation de séquences polyamides à extrémités réactives avec des séquences polyéthers à extrémités réactives, telles que, entre autres:

1) Séquences polyamides à bouts de chaînes diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-omega dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-omega aminocarboxyliques, de lactames ou de diacides carboxyliques et diamines en présence d'un diacide carboxylique limiteur de chaîne.

Le polyéther peut être par exemple un polytétraméthylene glycol (PTMG). Ce dernier est aussi appelé polytétrahydrofurane (PTHF).

La masse molaire en nombre des séquences polyamides est comprise entre 300 et 15000 et de préférence entre 600 et 5 000 g/mol. La masse molaire des séquences polyéther est comprise entre 100 et 6 000 et de préférence entre 200 et 3 000 g/mol. Les polymères à blocs polyamides et blocs polyéthers peuvent aussi comprendre des motifs repartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-omega amino acide) et un diacide limiteur de chaîne en présence d'eau. On obtient un polymère ayant essentiellement des blocs polyéthers, des blocs polyamides de longueur très variable, mais aussi les différents réactifs ayant réagi de façon aléatoire qui sont repartis de façon statistique le long de la chaîne polymère.

Les blocs polyétherdiol sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Le rapport de la quantité de copolymère à blocs polyamide et blocs polyéther sur la quantité de polyamide est avantageusement compris entre 1/99 et 15/85 en poids.

De préférence, le polyamide et/ou copolyamide selon l'invention est sélectionné dans le groupe constitué du polyamide 6 (PA6), du polyamide 66 (PA66), du poyamide 610 (PA 610), du polyamide 612 (PA 612), du polyamide 11 (PA11) et du polyamide 12 (PA12).

Plus préférablement, le polyamide et/ou copolyamide selon l'invention est le PA11.

Agent retardateur de flamme

De préférence l'agent retardateur de flamme de type ester de phosphonate cyclique est de formule générale (I) :

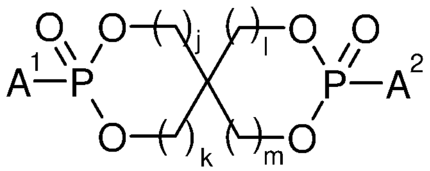

(I)

dans laquelle :

j, k, l et m, identiques ou différents, représentent un entier de 1 à 3 ;
$A^1$ et $A^2$, identiques ou différents, représentent un groupement alkyle de 1 à 4 atomes de carbone ou un groupement aryle de 5 à 7 atomes de carbone.

Plus préférablement, l'agent retardateur de flamme de type ester de phosphonate cyclique est de formule qénérale (II) :

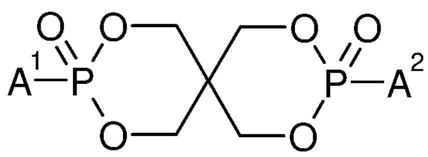

(II)

dans laquelle $A^1$ et $A^2$, identiques ou différents, représentent un groupement alkyle de 1 à 4 atomes de carbone ou un groupement aryle de 5 à 7 atomes de carbone. Encore plus préférablement, l'agent retardateur de flamme de type ester de phosphonate cyclique est de formule (III) suivante :

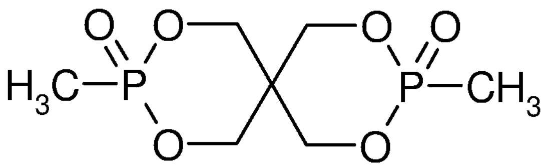

(III)

Généralement, l'agent retardateur de flamme est une poudre, qui a typiquement un diamètre médian en volume D50 compris dans la gamme de 1 à 40 $\mu$m, de préférence de 5 à 30 $\mu$m.

Poudre

La poudre selon l'invention a typiquement un diamètre médian en volume D50 compris dans la gamme de 5 à 200 $\mu$m.

Selon un mode de réalisation, la poudre a un diamètre médian en volume D50 compris dans la gamme de 10 à 150 $\mu$m, de préférence de 20 à 100 $\mu$m, de 25 à 80 $\mu$m.

Le diamètre médian en volume (D50) des particules de poudre est mesuré selon la norme ISO 9276 -parties 1 à 6 : « Représentation de données obtenues par analyse granulométrique ».

La poudre peut notamment être obtenue en mélangeant l'agent retardateur de flamme de type ester de phosphonate cyclique l'au moins un polyamide et/ou copolyamide. Toute méthode connue de l'homme du métier peut être utilisée.

A titre d'exemple, on peut citer : l'ajout l'agent retardateur de flamme de type ester de phosphonate cyclique lors de la synthèse du polyamide et/ou copolyamide, notamment en début ou en fin de synthèse ; le mélange par compoundage ; l'ajout de l'agent retardateur de flamme de type ester de phosphonate cyclique lors d'une quelconque étape d'un procédé de fabrication de poudre à partir dudit polyamide, notamment par dissolution-précipitation de polyamide dans un solvant contenant l'agent retardateur de flamme de type ester de phosphonate cyclique, par exemple dispersé ou dissous dans le solvant ; ou par mélange à sec (dry blend) avec la poudre. De préférence, le procédé de préparation de la poudre selon l'invention est réalisé par un mélange à sec de l'agent retardateur de flamme et l'au moins un polyamide et/ou copolyamide.

Pour réaliser le mélange à sec, on peut utiliser un mélangeur connu de l'homme du métier, par exemple un mélangeur Henschel, MAGIMIX, ou LOEDIGE. Le mélange est avantageusement réalisé à température ambiante. La vitesse de rotation peut être aisément ajustée.

Les poudres peuvent être éventuellement tamisées après le mélange.

Ceci constitue un aspect intéressant de l'invention, à savoir, l'agent retardateur de flamme sous forme de

poudre est très facile à disperser dans une poudre de polyamide à l'aide d'un simple mélangeur du type précité.

De préférence, la poudre comprend de 5 à 40% en masse, de préférence de 5 à 35% en masse, plus préférablement de 5 à 30% en masse, de préférence de 5 à 25% en masse, par rapport à la masse totale de la poudre, de l'agent retardateur de flamme de type ester de phosphonate cyclique.

De préférence, la poudre comprend au moins 40%, 50%, 60%, 70%, 80%, 90% ou 95% en masse de polyamide et/ou copolyamide par rapport à la masse totale de la poudre. De préférence également, la poudre comprend au plus 95%, 90%, 80%, 70%, 60%, 50% en masse de polyamide et/ou copolyamide par rapport à la masse totale de la poudre.

La poudre peut également comprendre au moins un autre polymère. A titre d'exemple de cet autre polymère on peut citer les polyoléfines, les polyesters, le polycarbonate, le PPO (abréviation de polyphénylène oxide), le PPS (abréviation de polyphénylène sulfide), les élastomères. Dans un mode de réalisation particulier de l'invention la poudre selon l'invention ne comprend pas d'autre polymère que le polyamide et/ou copolyamide selon l'invention.

De préférence, la poudre selon l'invention comprend au moins un autre additif, notamment sélectionné dans le groupe constitué d'un synergisant de l'agent retardateur de flamme de type ester de phopshonate cyclique, d'un pigment, d'un colorant, d'un plastifiant, d'un antioxydant, d'un agent de coulabilité, et d'un agent d'absorption des UV.

De préférence, le synergisant de l'agent retardateur de flamme de type ester de phopshonate cyclique est sélectionné dans le groupe constitué du diéthyl-phosphinate d'aluminium (DEPAL), du cyanurate de mélamine, du pyrophosphate, du phosphore rouge, des phosphates, du polyphosphate de melamine, et du polyphosphate d'ammonium.

Dans un mode de réalisation de l'invention, la poudre selon l'invention ne comprend pas de synergisant de l'agent retardateur de flamme de type ester de phopshonate cyclique.

Il a été observé que la poudre de la présente invention présente une bonne recyclabilité, notamment lorsqu'elle est préparée par un procédé de mélange à sec. Ainsi, l'invention permet de recycler la poudre non transformée en pièce suite à une impression 3D, à savoir, réutiliser la poudre non transformée dans un procédé d'impression 3D ultérieur pour obtenir des objets ignifugés aux propriétés mécaniques et propriétés ignifugeantes reproductibles.

Selon un aspect, l'invention concerne un procédé de préparation de pièces ignifugées par fusion sur lit de poudre, en particulier par impression 3D, plus particulièrement par impression 3D par frittage laser, en utilisant une poudre recyclée telle que définie ci-dessus.

*Pièce ignifugée*

La pièce ignifugée selon l'invention peut être de tout type susceptible d'être produite par fusion sur lit de poudre, en particulier par impression 3D, plus particulièrement par impression 3D par frittage laser.

Avantageusement, la poudre selon l'invention est telle qu'elle permet l'obtention de pièces classées V-2, plus avantageusement V-1 et encore plus avantageusement V-0 selon les normes UL 94 V et IEC 60695-11-10, notamment décrites dans les exemples.

## Description des figures

La Figure 1 est une photographie d'une pièce obtenue par impression 3D à partir d'une poudre selon l'invention.

La Figure 2 est une photographie d'une pièce obtenue par impression 3D à partir d'une poudre comparative.

L'invention sera davantage explicitée, de manière non limitative, à l'aide des exemples et figures qui suivent.

## Exemple

### Exemple 1

Une poudre selon l'invention est réalisée en mélangeant à sec (« dry blend », à l'aide d'un mélangeur Henschel) 83% en masse par rapport à la masse totale de la poudre de polyamide 11 (Rilsan Invent Natural (RIN), Arkema) et 17% en masse par rapport à la masse totale de la poudre d'agent retardateur de flamme de type ester de phosphonate cyclique de formule (III) suivante :

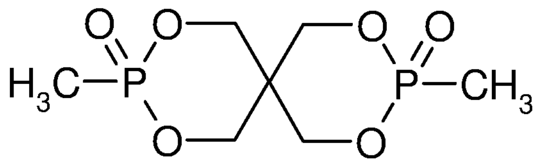

(III) (Aflammit® PCO 910, Thor)

Une poudre comparative est réalisée qui comprend 80% en masse par rapport à la masse totale de la poudre de polyamide 11 (Rilsan Invent Natural (RIN), Arkema) et 20% en masse par rapport à la masse totale de la poudre d'agent retardateur de flamme de type mélamine polyphosphate (Melapur™ 200, BASF).

Les poudres sont utilisées pour alimenter une imprimante 3D Formiga® P 100 (Eos) et pour imprimer une pièce de type barreau ayant les dimensions suivantes : longueur 127 mm, largeur 12,7 mm et épaisseur 2,5 mm.

Des photographies des pièces obtenues sont présentées dans la **Figure 1** (poudre selon l'invention) et dans la **Figure 2** (poudre comparative).

On observe qu'alors que la poudre selon l'invention permet d'obtenir une pièce parfaitement lisse, la pièce obtenue avec la poudre comparative présente des problèmes de coalescence. La poudre comparative est donc impropre à une utilisation pour une impression 3D.

## Exemple 2

Des essais ont été réalisés avec un agent retardateur de flamme commercial Technirez® FR-001, présentant un aspect liquide visqueux, qui a la même molécule que l'agent retardateur de flamme Antiblaze 1045®.

Essai 1 : L'agent retardateur de flamme Technirez® FR-001 a été introduit dans la poudre de polyamide au moyen d'un mélangeur Henschel.

On obtient une poudre très floconneuse. Il est impossible de l'utiliser dans la machine d'impression 3D, i.e. le frittage de pièce n'a pu être réalisé.

Essai 2 : On chauffe préalablement l'agent retardateur de flamme Technirez® FR-001 à 70°C avant de l'introduire, dans un mélangeur Henschel avec la poudre de polyamide sous agitation.

On obtient une poudre très floconneuse. Il est impossible de l'utiliser dans la machine d'impression 3D, i.e. le frittage de pièce n'a pu être réalisé.

## Exemple 3

La pièce obtenue à partir de la poudre selon l'invention telle que définie dans l'exemple 1 a été testée selon la norme UL 94V.

Brièvement, selon cette norme, la longueur de l'échantillon est de 127 mm et sa largeur de 12,7 mm. Son épaisseur ne doit pas excéder 12,7mm. L'échantillon est fixé à 1/4 de son extrémité supérieure en position verticale. Un filet métallique recouvert de coton chirurgical est placé à 305 mm sous l'échantillon. Le brûleur est réglé pour former une flamme bleue de 19 mm qui monte en température de 100 à 700°C en 44 $\pm$ 2 secondes. Cette flamme est dirigée de dessous sur le bord inférieur de l'échantillon plastique à une distance de 9,5 mm. Elle est appliquée pendant 10 secondes, puis retirée. Le temps de combustion de l'échantillon est mesuré. Dès que la combustion s'arrête, on réapplique la flamme pendant 10 secondes. Aussitôt retirée, on mesure de nouveau le temps de combustion et d'incandescence. Le test complet est pratiqué sur cinq échantillons.

Le matériau testé est classé UL 94 V-O si:

A) Aucun des cinq échantillons ne brûle plus de 10 secondes après que la flamme du brûleur ait été retirée.
B) Le temps de combustion totale sur les 10 tests ne dépasse pas 50 secondes.
C) Aucun des échantillons testés ne brûle, soit avec une flamme, soit par incandescence, jusqu'à la mâchoire de maintien.
D) Aucune goutte incandescente, pouvant enflammer le coton placé au-dessous, ne tombe d'aucun échantillon.
E) Aucun échantillon ne présente un temps d'incandescence dépassant 30 secondes.

Le matériau testé est classé UL 94 V-1 si:

A) Aucun des cinq échantillons ne brûle plus de 30 secondes après que la flamme du brûleur ait été retirée.
B) Le temps de combustion totale sur les 10 tests ne dépasse pas 250 secondes.

C) Aucun des échantillons testés ne brûle, soit avec une flamme, soit par incandescence, jusqu'à la mâchoire de maintien.
D) Aucune goutte incandescente, pouvant enflammer le coton placé au-dessous, ne tombe d'aucun échantillon.
E) Aucun échantillon ne présente un temps d'incandescence dépassant 60 secondes.

Le matériau testé est classé UL 94 V-2 si:

A) Aucun des cinq échantillons ne brûle plus de 30 secondes après que la flamme du brûleur ait été retirée.
B) Le temps de combustion totale sur les 10 tests ne dépasse pas 250 secondes.
C) Aucun des échantillons testés ne brûle, soit avec une flamme, soit par incandescence, jusqu'à la mâchoire de maintien.
D) Quelques fragments peuvent se détacher de l'échantillon testé, brûlant temporairement, et dont certains peuvent enflammer le coton placé au-dessous.
E) Aucun échantillon ne présente un temps d'incandescence dépassant 60 secondes.

Résultats de tests selon la norme UL 94V: La pièce selon l'invention est classée V-0 selon la norme UL 94 mesurée avec une épaisseur de 1,3 mm sur les échantillons

Par comparaison, une pièce de mêmes dimension obtenue avec la poudre FR-106 (Advanced *Laser Materials,* ALM) de polyamide ignifugée pour impression 3D à base de PA11 (PA D80-ST, ALM) et comprenant un agent retardateur de flamme de type polyacrylate bromé (FR-1025, ALM) a été testée et est classée V-2 selon la norme UL 94, mesurée avec une épaisseur de 2,5 mm sur les échantillons.

Le mélange selon l'invention est adapté à l'obtention de pièces de bonne qualité en impression 3D tout en leur conférant une ignifugation équivalente ou supérieure à celle obtenue selon l'état de la technique.

## Exemple 4

En outre, les propriétés mécaniques de contraintes maximales et d'allongement à la rupture des pièces obtenues à l'aide de la poudre selon l'invention sont équivalentes à celles de pièces obtenues avec la poudre FR-106 comparative comprenant un agent retardateur de flamme halogéné. On note même une amélioration du module de Young mesuré selon la norme ISO 527-2: 2012-1A, avec environ 2000 MPa pour les pièces de l'invention contre 1750 pour les pièces obtenues avec la poudre FR-106 comparative.

La présente invention fournit ainsi une poudre sans additifs halogénés, facile à préparer et à utiliser dans les machines 3D, permettant de fabriquer une pièce ayant une meilleure propriété ignifugeante tout en conservant les propriétés mécaniques.

## Revendications

1. Procédé de préparation de pièces ignifugées par fusion sur lit de poudre, dans lequel la poudre comprend au moins un polyamide et/ou copolyamide et au moins un agent retardateur de flamme de type ester de phosphonate cyclique, dans lequel l'agent retardateur de flamme de type ester de phosphonate cyclique est de formule générale (I) :

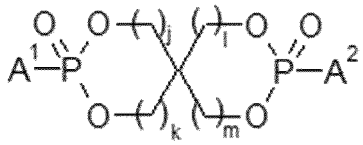

(I)

dans laquelle :

j, k, l et m, identiques ou différents, représentent un entier de 1 à 3 ;
$A^1$ et $A^2$, identiques ou différents, représentent un groupement alkyle de 1 à 4 atomes de carbone ou un groupement aryle de 5 à 7 atomes de carbone.

2. Procédé selon la revendication 1, dans lequel le procédé est un procédé d'impression 3D et la poudre est une

poudre pour impression 3D, de préférence le procédé est un procédé d'impression 3D par frittage laser de la poudre.

3. Procédé selon la revendication 1 ou 2, dans lequel le polyamide est sélectionné dans le groupe constitué du polyamide 6 (PA6), du polyamide 66 (PA66), du polyamide 610 (PA 610), du polyamide 612 (PA 612), du polyamide 11 (PA11) et du polyamide 12 (PA12), de préférence le polyamide est le PA11.

4. Procédé selon l'une des revendications 1 à 3, dans lequel l'agent retardateur de flamme de type ester de phosphonate cyclique est de formule générale (II) :

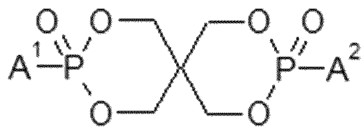

(II)

dans laquelle $A^1$ et $A^2$, identiques ou différents, représentent un groupement alkyle de 1 à 4 atomes de carbone ou un groupement aryle de 5 à 7 atomes de carbone.

5. Procédé selon l'une des revendications 1 à 4, dans lequel l'agent retardateur de flamme de type ester de phosphonate cyclique est de formule (III) suivante :

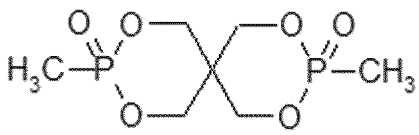

(III)

6. Procédé selon l'une des revendications 1 à 5, dans lequel la poudre comprend de 5 à 40% en masse, de préférence de 5 à 25% en masse, par rapport à la masse totale de la poudre, de l'agent retardateur de flamme de type ester de phosphonate cyclique et/ou la poudre comprend au moins 50% en masse de polyamide et/ou copolyamide par rapport à la masse totale de la poudre.

7. Procédé selon l'une des revendications 1 à 6 dans lequel la poudre comprend au moins un autre additif, notamment sélectionné dans le groupe constitué d'un synergisant de l'agent retardateur de flamme de type ester de phopshonate cyclique, d'un pigment, d'un colorant, d'un plastifiant, d'un antioxydant, d'un agent de coulabilité, et d'un agent d'absorption des UV.

8. Poudre destinée à la préparation de pièces ignifugées par fusion sur lit de poudre, comprenant au moins un polyamide et/ou copolyamide, notamment tel que défini dans la revendication 3, et au moins un agent retardateur de flamme de type ester de phosphonate cyclique, dans lequel l'agent retardateur de flamme de type ester de phosphonate cyclique est de formule générale (I) :

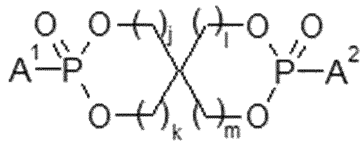

(I)

dans laquelle :

j, k, l et m, identiques ou différents, représentent un entier de 1 à 3 ;

$A^1$ et $A^2$, identiques ou différents, représentent un groupement alkyle de 1 à 4 atomes de carbone ou un groupement aryle de 5 à 7 atomes de carbone.

**9.** Poudre selon la revendication 8, destinée à un procédé d'impression 3D, plus particulièrement par frittage laser.

**10.** Poudre selon la revendication 8 ou 9, dans laquelle l'agent retardateur de flamme de type ester de phosphonate cyclique est de formule générale (II) :

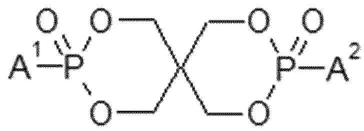

(II)

dans laquelle $A^1$ et $A^2$, identiques ou différents, représentent un groupement alkyle de 1 à 4 atomes de carbone ou un groupement aryle de 5 à 7 atomes de carbone, et de préférence l'agent retardateur de flamme de type ester de phosphonate cyclique est de formule (III) suivante :

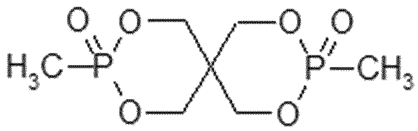

(III)

**11.** Poudre selon l'une des revendications 8 à 10, dans laquelle la poudre comprend de 5 à 40% en masse, de préférence de 5 à 25% en masse, par rapport à la masse totale de la poudre, de l'agent retardateur de flamme de type ester de phosphonate cyclique et/ou la poudre comprend au moins 50% en masse de polyamide et/ou copolyamide par rapport à la masse totale de la poudre.

**12.** Poudre selon l'une des revendications 8 à 11, dans laquelle la poudre comprend au moins un autre additif, notamment sélectionné dans le groupe constitué d'un synergisant de l'agent retardateur de flamme de type ester de phosphonate cyclique, d'un pigment, d'un colorant, d'un plastifiant, d'un antioxydant, d'un agent de coulabilité, et d'un agent d'absorption des UV.

**13.** Utilisation d'une poudre telle que définie dans l'une des revendications 8 à 12, dans un procédé de fusion sur lit de poudre, en particulier un procédé d'impression 3D, plus particulièrement par frittage laser, pour produire une pièce ignifugée.

**14.** Procédé de préparation d'une poudre telle que définie dans l'une des revendications 8 à 12, comprenant le mélange d'au moins un polyamide et/ou copolyamide et d'au moins un agent retardateur de flamme de type ester de phosphonate cyclique, dans lequel l'agent retardateur de flamme de type ester de phosphonate cyclique est de formule générale (I) :

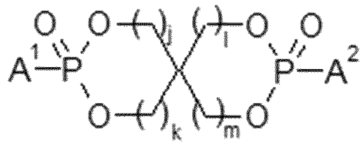

(I)

dans laquelle :

j, k, l et m, identiques ou différents, représentent un entier de 1 à 3 ;
$A^1$ et $A^2$, identiques ou différents, représentent un groupement alkyle de 1 à 4 atomes de carbone ou un groupement aryle de 5 à 7 atomes de carbone.

**15.** Procédé selon la revendication 14, dans lequel, le mélange est réalisé par un mélange à sec.

**Patentansprüche**

**1.** Verfahren zur Herstellung von flammgeschützten Teilen durch Pulverbettfusion, wobei das Pulver mindestens ein Polyamid und/oder Copolyamid und mindestens ein Flammschutzmittel vom Typ cyclischer Phosphonatester umfasst, wobei das Flammschutzmittel vom Typ cyclischer Phosphonatester die allgemeine Formel (I) aufweist:

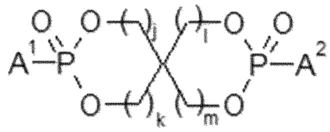

(I)

wobei:

j, k, l und m, die gleich oder verschieden sind, für eine ganze Zahl von 1 bis 3 stehen;
$A^1$ und $A^2$, die gleich oder verschieden sind, für eine Alkylgruppe mit 1 bis 4 Kohlenstoffatomen oder eine Arylgruppe mit 5 bis 7 Kohlenstoffatomen stehen.

**2.** Verfahren nach Anspruch 1, wobei es sich bei dem Verfahren um ein 3D-Druckverfahren handelt und es sich bei dem Pulver um ein Pulver für den 3D-Druck handelt, es sich bei dem Verfahren vorzugsweise um ein Verfahren zum 3D-Drucken durch Lasersintern des Pulvers handelt.

**3.** Verfahren nach Anspruch 1 oder 2, wobei das Polyamid aus der Gruppe bestehend aus Polyamid 6 (PA 6), Polyamid 66 (PA 66), Polyamid 610 (PA 610), Polyamid 612 (PA 612), Polyamid 11 (PA11) und Polyamid 12 (PA12) ausgewählt ist, es sich bei dem Polyamid vorzugsweise um PA 11 handelt.

**4.** Verfahren nach einem der Ansprüche 1 bis 3, wobei das Flammschutzmittel vom Typ cyclischer Phosphonatester die allgemeine Formel (II) aufweist:

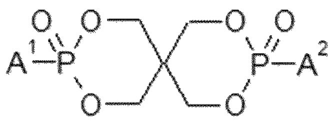

(II)

wobei $A^1$ und $A^2$, die gleich oder verschieden sind, für eine Alkylgruppe mit 1 bis 4 Kohlenstoffatomen oder eine Arylgruppe mit 5 bis 7 Kohlenstoffatomen stehen.

**5.** Verfahren nach einem der Ansprüche 1 bis 4, wobei das Flammschutzmittel vom Typ cyclischer Phosphonatester die folgende Formel (III) aufweist:

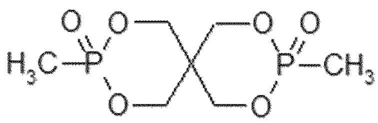

(III)

**6.** Verfahren nach einem der Ansprüche 1 bis 5, wobei das Pulver 5 bis 40 Massen-%, vorzugsweise 5 bis 25 Massen-%, bezogen auf die Gesamtmasse des Pulvers, des Flammschutzmittels vom Typ cyclischer Phosphonatester umfasst und/oder das Pulver mindestens 50 Massen-% Polyamid und/oder Copolyamid, bezogen auf die Gesamtmasse des Pulvers, umfasst.

**7.** Verfahren nach einem der Ansprüche 1 bis 6, wobei das Pulver mindestens ein weiteres Additiv umfasst, das insbesondere aus der Gruppe bestehend aus einem Synergisten des Flammschutzmittels vom Typ cyclischer Phosphonatester, einem Pigment, einem Farbmittel, einem Weichmacher, einem Antioxidans, einem Fließmittel und einem UV-Absorptionsmittel ausgewählt ist.

**8.** Pulver zur Herstellung von flammgeschützten Teilen durch Pulverbettfusion, umfassend mindestens ein Polyamid und/oder Copolyamid, insbesondere wie in Anspruch 3 definiert, und mindestens ein Flammschutzmittel vom Typ cyclischer Phosphonatester, wobei das Flammschutzmittel vom Typ cyclischer Phosphonatester die allgemeine Formel (I) aufweist:

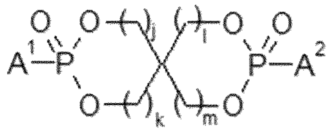

(I)

wobei:

j, k, l und m, die gleich oder verschieden sind, für eine ganze Zahl von 1 bis 3 stehen;
$A^1$ und $A^2$, die gleich oder verschieden sind, für eine Alkylgruppe mit 1 bis 4 Kohlenstoffatomen oder eine Arylgruppe mit 5 bis 7 Kohlenstoffatomen stehen.

**9.** Pulver nach Anspruch 8 für ein 3D-Druckverfahren, spezieller durch Lasersintern.

**10.** Pulver nach Anspruch 8 oder 9, wobei das Flammschutzmittel vom Typ cyclischer Phosphonatester die allgemeine Formel (II) aufweist:

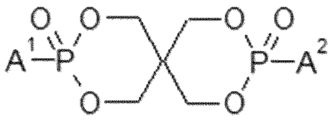

(II)

wobei $A^1$ und $A^2$, die gleich oder verschieden sind, für eine Alkylgruppe mit 1 bis 4 Kohlenstoffatomen oder eine Arylgruppe mit 5 bis 7 Kohlenstoffatomen stehen, und das Flammschutzmittel vom Typ cyclischer Phosphonatester vorzugsweise die folgende Formel (III) aufweist:

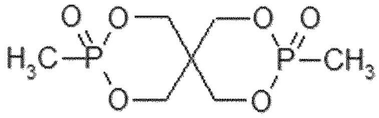

(III)

**11.** Pulver nach einem der Ansprüche 8 bis 10, wobei das Pulver 5 bis 40 Massen-%, vorzugsweise 5 bis 25 Massen-%, bezogen auf die Gesamtmasse des Pulvers, des Flammschutzmittels vom Typ cyclischer Phosphonatester umfasst und/oder das Pulver mindestens 50 Massen-% Polyamid und/oder Copolyamid, bezogen auf die Gesamtmasse des Pulvers, umfasst.

**12.** Pulver nach einem der Ansprüche 8 bis 11, wobei das Pulver mindestens ein weiteres Additiv umfasst, das insbesondere aus der Gruppe bestehend aus einem Synergisten des Flammschutzmittels vom Typ cyclischer Phosphonatester, einem Pigment, einem Farbmittel, einem Weichmacher, einem Antioxidans, einem Fließmittel und einem

UV-Absorptionsmittel ausgewählt ist.

13. Verwendung eines Pulvers gemäß einem der Ansprüche 8 bis 12 in einem Pulverbettfusionsverfahren, insbesondere einem 3D-Druckverfahren, spezieller durch Lasersintern, zur Herstellung eines flammgeschützten Teils

14. Verfahren zur Herstellung eines Pulvers gemäß einem der Ansprüche 8 bis 12, umfassend das Mischen mindestens eines Polyamids und/oder Copolyamids und mindestens eines Flammschutzmittel vom Typ cyclischer Phosphonatester, wobei das Flammschutzmittel vom Typ cyclischer Phosphonatester die allgemeine Formel (I) aufweist:

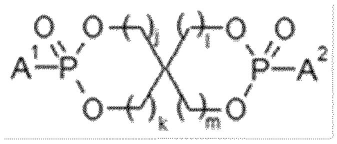

(I)

wobei:

j, k, l und m, die gleich oder verschieden sind, für eine ganze Zahl von 1 bis 3 stehen;
$A^1$ und $A^2$, die gleich oder verschieden sind, für eine Alkylgruppe mit 1 bis 4 Kohlenstoffatomen oder eine Arylgruppe mit 5 bis 7 Kohlenstoffatomen stehen.

15. Verfahren nach Anspruch 14, wobei das Mischen durch Trockenmischen durchgeführt wird.

## Claims

1. Process for the preparation of flame-retarded parts by powder bed fusion, in which the powder comprises at least one polyamide and/or copolyamide and at least one flame-retardant agent of cyclic phosphonate ester type, in which the flame-retardant agent of cyclic phosphonate ester type is of general formula (I):

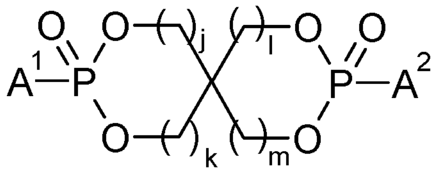

(I)

in which:

j, k, 1 and m, which are identical or different, represent an integer from 1 to 3;
$A^1$ and $A^2$, which are identical or different, represent an alkyl group of 1 to 4 carbon atoms or an aryl group of 5 to 7 carbon atoms.

2. Process according to Claim 1, in which the process is a 3D printing process and the powder is a powder for 3D printing; preferably, the process is a process for 3D printing by laser sintering of the powder.

3. Process according to Claim 1 or 2, in which the polyamide is selected from the group consisting of polyamide 6 (PA 6), polyamide 66 (PA 66), polyamide 610 (PA 610), polyamide 612 (PA 612), polyamide 11 (PA 11) and polyamide 12 (PA 12); preferably, the polyamide is PA 11.

4. Process according to one of Claims 1 to 3, in which the flame-retardant agent of cyclic phosphonate ester type is of general formula (II):

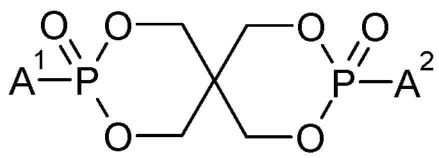

(II)

in which $A^1$ and $A^2$, which are identical or different, represent an alkyl group of 1 to 4 carbon atoms or an aryl group of 5 to 7 carbon atoms.

**5.** Process according to one of Claims 1 to 4, in which the flame-retardant agent of cyclic phosphonate ester type is of following formula (III):

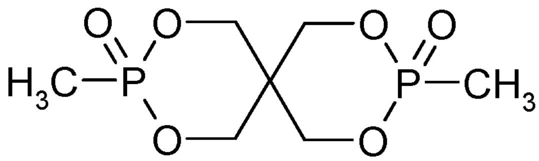

(III)

**6.** Process according to one of Claims 1 to 5, in which the powder comprises from 5% to 40% by weight, preferably from 5% to 25% by weight, with respect to the total weight of the powder, of the flame-retardant agent of cyclic phosphonate ester type and/or the powder comprises at least 50% by weight of polyamide and/or copolyamide, with respect to the total weight of the powder.

**7.** Process according to one of Claims 1 to 6, in which the powder comprises at least one other additive, in particular selected from the group consisting of a synergist of the flame-retardant agent of cyclic phosphonate ester type, of a pigment, of a dye, of a plasticizer, of an antioxidant, of a flow agent and of a UV absorption agent.

**8.** Powder intended for the preparation of flame-retarded parts by powder bed fusion, comprising at least one polyamide and/or copolyamide, in particular as defined in Claim 3, and at least one flame-retardant agent of cyclic phosphonate ester type, in which the flame-retardant agent of cyclic phosphonate ester type is of general formula (I):

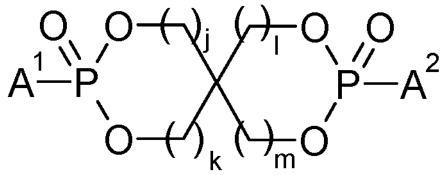

(I)

in which:

j, k, 1 and m, which are identical or different, represent an integer from 1 to 3;
$A^1$ and $A^2$, which are identical or different, represent an alkyl group of 1 to 4 carbon atoms or an aryl group of 5 to 7 carbon atoms.

**9.** Powder according to Claim 8, intended for a 3D printing process, more particularly a process for 3D printing by laser sintering.

**10.** Powder according to Claim 8 or 9, in which the flame-retardant agent of cyclic phosphonate ester type is of general formula (II):

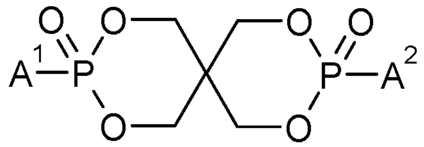

(II)

in which $A^1$ and $A^2$, which are identical or different, represent an alkyl group of 1 to 4 carbon atoms or an aryl group of 5 to 7 carbon atoms, and preferably the flame-retardant agent of cyclic phosphonate ester type is of following formula (III):

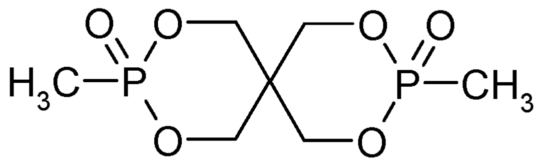

(III)

**11.** Powder according to one of Claims 8 to 10, in which the powder comprises from 5% to 40% by weight, preferably from 5% to 25% by weight, with respect to the total weight of the powder, of the flame-retardant agent of cyclic phosphonate ester type and/or the powder comprises at least 50% by weight of polyamide and/or copolyamide, with respect to the total weight of the powder.

**12.** Powder according to one of Claims 8 to 11, in which the powder comprises at least one other additive, in particular selected from the group consisting of a synergist of the flame-retardant agent of cyclic phosphonate ester type, of a pigment, of a dye, of a plasticizer, of an antioxidant, of a flow agent and of a UV absorption agent.

**13.** Use of a powder as defined in one of Claims 8 to 12, in a powder bed fusion process, in particular a 3D printing process, more particularly a process for 3D printing by laser sintering, in order to produce a flame-retarded part.

**14.** Process for the preparation of a powder as defined in one of Claims 8 to 12, comprising the blending of at least one polyamide and/or copolyamide and of at least one flame-retardant agent of cyclic phosphonate ester type, in which the flame-retardant agent of cyclic phosphonate ester type is of general formula (I):

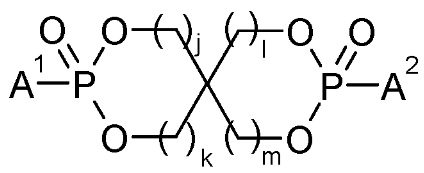

(I)

in which:

j, k, 1 and m, which are identical or different, represent an integer from 1 to 3;
$A^1$ and $A^2$, which are identical or different, represent an alkyl group of 1 to 4 carbon atoms or an aryl group of 5 to 7 carbon atoms.

**15.** Process according to Claim 14, in which the blending is carried out by dry blending.

[Fig. 1]

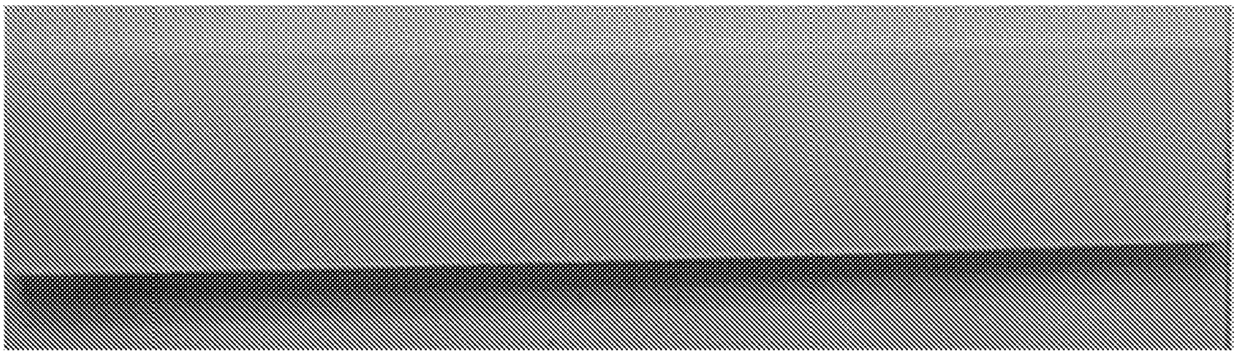

[Fig. 2]

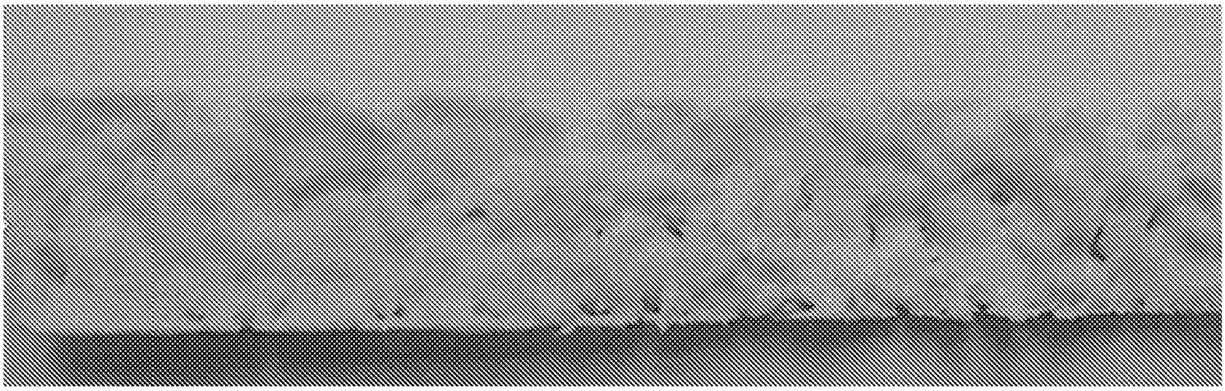

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20100324190 A
- US 2005027047 A1
- WO 2009138692 A
- US 9643359 B
- EP 1648686 A
- FR 2867190
- FR 2873380
- FR 2930555